# EUROPÄISCHE PATENTSCHRIFT

(11) **EP 2 254 135 B1**
(45) Veröffentlichungstag und Bekanntmachung des Hinweises auf die Patenterteilung: **20.04.2016**
(21) Anmeldenummer: 10000406.8
(22) Anmeldetag: 18.01.2010
(51) Int. Cl.: H01H 31/00, H01H 31/32, H02B 13/045

(54) **Metallgekapselter, mehrphasiger, gasisolierter Sammelschienentrenn- und Erdungsschalter**
Metal-enclosed, multi-phase gas-insulated busbar disconnecting and earthing switch
Sectionneur d'aiguillage et de terre blindé, multiphase et isolé au gaz

(30) Priorität: 20.05.2009 DE 102009022105
(43) Veröffentlichungstag der Anmeldung: 24.11.2010
(73) Patentinhaber: ABB Technology AG, 8050 Zürich (CH)
(72) Erfinder: Zwicky, Daniel, 5443 Niederrohrdorf (CH); Saxl, David, 8046 Zürich (CH); Mann, Michael, 63755 Alzenau (DE); Kuhl, Daniel, 60386 Frankfurt (DE); Brandl, Florian, 8052 Zürich (CH)
(74) Vertreter: Kock, Ina

(56) Entgegenhaltungen:
- EP-A1- 2 091 057
- EP-A2- 0 824 264
- JP-A- 2000 134 733
- JP-A- 2004 120 974
- JP-A- 2004 320 883
- US-A- 4 644 442

## Beschreibung

Die Erfindung betrifft einen Sammelschienentrenn- und Erdungsschafter gemäß dem Oberbegriff des Anspruches 1.

Ein derartiger kombinierter Trenn-und Erdungsschalter für eine metallgekapselte, gasisolierte Hochspannungsschaltanlage ist aus der EP 0 824 264 B1 bekannt geworden. Der Kontaktbolzen für jede Phase ist in einem Gehäuseelement verschiebbar gelagert, wobei die Bewegungslinien der Kontaktbolzen parallel verlaufen. Der Antrieb des Kontaktbolzens erfolgt über eine Antriebsspindel, die als Zahnritzelstange ausgebildet ist und die mit einem Zahnstangenabschnitt auf dem Kontaktbolzen kämmt. Die Bewegungslinien der Kontaktbolzen verlaufen unter einem Winkel von ca. 40° bezogen auf die Verbindungsleiter zwischen zwei Flanschen.

Aus der DE 24 14 200 A1 ist eine metallgekapselte Schaltanlage bekannt geworden, bei der ein Kontaktbolzen innerhalb eines Trägergehäuses hin-und her bewegbar ist, wobei der Kontaktbolzen in einer Stellung mit einem Aktivteil und in einer zweiten Stellung mit einem Erdungskontakt in Verbindung gelangt. Der Antrieb des Kontaktbolzens erfolgt über eine parallel zum Kontaktbolzen verlaufende, drehbare, ein Außengewinde aufweisende Spindel. Am Kontaktbolzen ist senkrecht dazu ein drehbaren Spindel durchgegriffen ist, wobei die Gewindestange vom einem Isolator, der mit ihr fluchtet, angetrieben oder über Kegelzahnradgetriebe von der Längsseite des kombinierten Trenn- und Erdungsschalters in Drehung versetzt wird. Diese Schaltanlage ist eine einphasig gekapselte Schaltanlage.

Eine ähnliche Konstruktion ist auch aus der US 3 665 135 bekannt geworden.

Die EP 0 678 952 A1 beschreibt einen kombinierten Trennschalter und Erdungsschalter, die beide allerdings getrennt voneinander betätigt werden.

Weitere metallgekapselte, mehrphasige Sammelschienentrenn-und Erdungsschalter sind in der JP 2004320883A, US 4644442A und der JP 2000134733A beschrieben.

Aufgabe der Erfindung ist es, einen Sammelschienentrennschalter der eingangs genannten Art zu schaffen, der einfach-aufgebaut ist und einen geringen Platzbedarf benötigt.

Diese Aufgabe wird erfingdungsgemäß gelöst durch die Merkmale des Anspruches 1.

Erfindungsgemäß sind die mit den Leistungsschalterpolen verbundenen zweiten Leiterelemente senkrecht zu den ersten Leiterelermenten, die die Sammelschienen miteinander verbinden, ausgerichtet, wobei die ersten Leiterelemente etwa U-förmig ausgebildet und um die zweiten Leiter-elemente herumgeführt sind; zwischen einer der Gehäuseinnenwände und den ersten und zweiten Leiterelementen ist für jede Phase eine Trenn- und Erderschaltkontaktanordnung vorgesehen

Erfindungsgemäß sind die Trenn- und Erderschaltelernente als Schubtrennschalter ausgebildet, wobei die Bewegungslinien der Schubkontaktstücke in einer Ebene liegen, die senkrecht zu der Ebene verläuft, die durch die Sammelschienen aufgespannt ist.

Aufgrund der vorteilhaften Anordnung der Leiterelemente innerhalb des Gehäuses kann dieses Gehäuse als Hohlkörper mit ovalem Querschnitt ausgebildet sein, dessen längere Achse etwa parallel zur Leitungsführung der ersten Leiterelementen und der Sammelschienen ausgerichtet ist. Dadurch wird eine erhebliche Einsparung an Platz gegenüber einen Gehäuse mit einem kreisförmigen Querschnitt erreicht.

Die Sammelschienen schließen jeweils an den Schmalseiten oder an den Abschnitten des Gehäuses an, die den kleineren Innenradius aufweisen. Damit wird der Platzbedarf ebenfalls minimiert.

Weitere vorteilhafte Ausgestalten und Verbesserungen der Erfindung sind den Unteransprüchen zu entnehmen.

Dabei verläuft die Bewegungslinie des als Schubkontaktbolzen ausgebildeten beweglichen Schaltstiftes aller Trenn-und Erdungsschaltkontaktanordnungen für jede Phase senkrecht zu der Ebene, in der die Sammelschienen angeordnet sind, und damit auch senkrecht zum Verlauf der längeren Querschnittsachse der Ovalform.

Die Bewegungslinien der Kontaktbolzen aller Phasen liegen dabei in einer Ebene, wobei die Kontaktbolzen von je einer mit der Bewegungslinie fluchtenden Isolierspindel antreibbar sind, wobei die Antriebsspindel in der Ebene der Bewegungslinien liegt und senkrecht zu den Isolierspindeln verläuft und mit diesen über je ein Umlenkgetriebe gekoppelt ist. Das Umlenkgetriebe für den Antrieb der Kontaktbolzen befindet sich dabei in den Erdungskontaktstücken.

Anhand der Zeichnung, in der ein Ausführungsbeispiel einer erfindungsgemäßen Anordnung sowie zwei weitere Beispiele dargestellt sind, sollen die Erfindung, sowie weitere vorteilhafte Ausgestaltungen und Verbesserungen und weitere Vorteile der Erfindung näher erläutert und beschrieben werden.

Es zeigen:
- Fig. 1: eine perspektivische Ansicht auf ein Gehäuse mit einem kombinierten Trenn-und Erdungsschalter,
- Fig. 2: eine Schnittansicht gemäß Schnittlinie II-II der Fig. 1, gemäß einer ersten Ausführungsform der Erfindung,
- Fig. 3: eine perspektivische Ansicht der Innenteile der Erfindung gemäß Fig. 2,
- Fig. 4: eine perspektivische Ansicht eines Beispielhaften Trenn- und Erdungsschalters, ähnlich der der Fig. 3 und
- Fig. 5: eine perspektivische Ansicht eines Beispielhaften Trenn- und Erdungsschalters, in ähnlicher Darstellung wie in den Figuren 3 und 4.

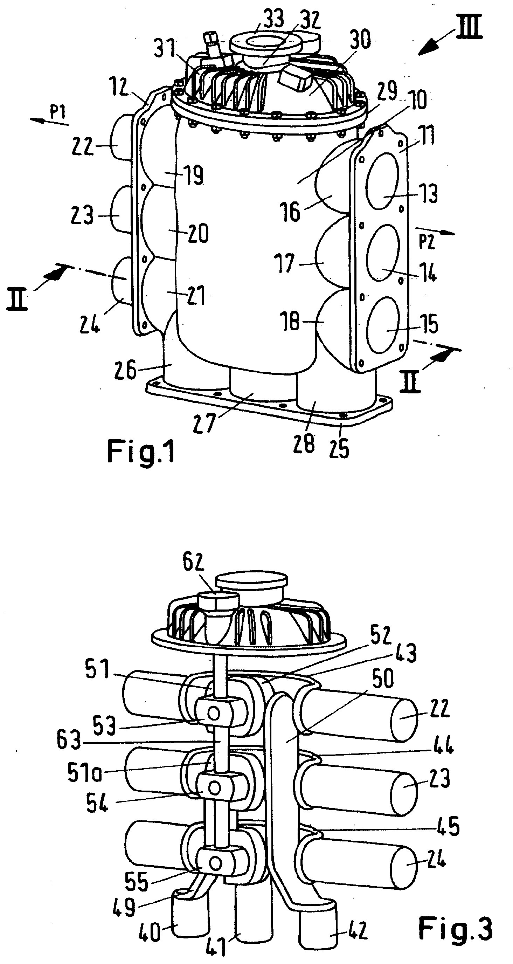

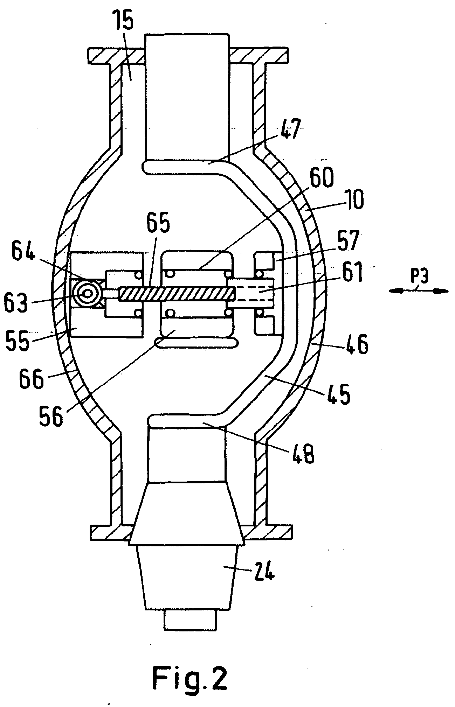

Zunächst ist zu bemerken, dass die Einbauten gemäß Figuren 3, 4 und 5 in das Gehäuse eingesetzt werden, das in der Fig. 1 beziehungsweise in der Fig. 2 im Schnitt dargestellt ist.

Wie aus der Fig. 1 zu entnehmen ist, besitzt das Gehäuse 10 eine ovale Form mit sich gegenüberliegenden Mantellinien im Gehäusebereich mit dem kleineren Innenradius, einen ersten Flansch 11 und einen zweiten Flansch 12, die Öffnungen 13, 14 und 15 umgeben. An dem Gehäuse 10 schließen dazu jeweils drei Stutzen 16, 17 und 18 an, die in die Öffnungen 13, 14 und 15 einmünden. Auf der entgegengesetzt liegenden Seite des Gehäuses 10 sind Stutzen 19, 20, 21 vorgesehen, die parallel zu den Stutzen 16, 17 und 18 verlaufen und die von dem Flansch 12 umgeben sind, wobei in gleicher Weise wie bei den Öffnungen 13, 14 und 15 auch der Flansch 12 Öffnungen aufweist, die, da verdeckt, nicht zu sehen sind; in diese Öffnungen eingesetzt ist je eine Sammelschlenendurchführung 22, 23 und 24, die aus Übersichtlichkeitsgründen in den Öffnungen 13, 14 und 15 weggelassen sind, die aber auch in die Öffnungen 13, 14 und 15 eingesetzt werden sollen. Diese Durchführungen 22, 23 und 24 sind für die Erfindung nicht von Bedeutung.

Die Stutzen 16, 17 rund 19 beziehungsweise 19, 20 und 21 sind jeweils an dem Bereich bzw. an der Mantellinie des Gehäuses 10 angeschlossen, an dem bzw. der sich der kleinere Innenradius der Ovalform des Gehäuses befindet. Die Stutzen 16, 17 und 19 bzw. 19, 20,21 liegen vertikal übereinander.

Senkrecht zu den Flanschen 11 und 12 ist ein dritter Flansch 25 vorgesehen, der weitere Stutzen 26, 27 und 28 umschließt, in denen Zuleitungen zu den Leistungsschalterpolen eines in der Zeichnung nicht näher dargestellten Leistungsschalters verlaufen. Das dem Flansch 25 entgegengesetzte Ende des Gehäuses 10 besitzt einen vierten Flansch 29, der der Ovalform des Gehäuses 29 angepasst ist und der mittels eines Deckels 30 verschlossen sind, auf dem eine Anzahl von Kühlrippen 31 angeformt sind. Der Deckel 30 ist dabei Haubenförmig und besitzt im Bereich seiner Mittelachse einen weiteren Stutzen 32 mit einem Flansch 33, an dem beispielsweise ein Sichtfenster oder dergleichen angeschlossen werden könnte.

Es sei nun Bezug genommen auf die Fig. 3.

Die Darstellung gemäß Fig. 3 der in das Gehäuse einzusetzenden Einbauten ist eine Ansicht gemäß Pfeilrichtung III der Fig. 1, somit also eine Ansicht von hinten. Die Einbauten umfassen Anschlusselemente 40, 41 und 42, die zu den Leistungsschalterpolen führen, wobei das Anschlusselement 42 den Stutzen 26 und das Anschlusselement 40 den Stutzen 28 durchgreifen. Das Anschlusselement 41 durchgreift den Stutzen 27. Man erkennt In der Fig. 3 die drei Durchführungen 22, 23 und 24, die an ersten Leiterelementen 43, 44 und 45 angeschlossen sind, die, wie aus Fig. 2 ersichtlich, in der das Leiterteilstück 45 im Schnitt gemäß Schnittlinie II - II der Fig. 1 gezeigt ist, eine U-Form aufweisen, wobei die Außenseite der U-form einer ersten Innenfläche 46 des Gehäuses 10, das ist die Innenfläche 46, die sich im Bereich des größeren Radius der Ovalform befindet, etwa entspricht und sich möglichst nahe an dieser ersten Innenfläche 46 entlang erstrecken, wobei die Isolierabstände gewährleistet sind. Die beiden parallel zueinander verlaufenden Schenkel 47 und 48 sind über die Durchführungen 24 und natürlich auch über die Durchführungen 22 und 23 mit den entsprechenden Sammelschienenverbindungen, die in der Fig. 1 als in Pfeilrichtung P1 und P2 weitergeführt zu denken sind.

In der Fig. 2 ist die Ovalform nicht sehr deutlich gezeigt; jedenfalls ist bei der Ovalform die Achse, die mit den Mittelachsen der hoffnung 15 und der Durchführung 24 fluchtet, deutlich größer zu denken als die quer dazu verlaufende Achse.

Mit den Anschlusselementen 40, 41 und 42 sind zweite Leiterelemente 49 und 50 verbunden, wobei die Fig. 3 das Leiterelement, das das Anschlusselement 41 mit der zu der Durchführung 23 führenden Sammelschiene verbindet, in der Fig. 3 nicht sichtbar ist.

Das zweite Leiterelement 50, das mit dem Anschlussleiter 42 des Leistungsschalters verbunden ist, verlauft parallel zur Längsachse des Gehäuses, die durch die Mitte der Ovalform und senkrecht zu den durch die Flanschen 25 und 29 aufgespannte Ebene des Gehäuses 10 verläuft, und erstreckt sich bis zu den Sammelschienen, die durch die Öffnungen 13 beziehungsweise durch die Durchführungen 22 geführt sind. Am freien Ende des zweiten Leiterelementes 50 schließt das Aktivteil 51 eines Trenn-und Erdungsschalters an, dem ein zweites Aktivteil 52 zugeordnet ist, das mit dem ersten Leiterelement 43 elektrisch leitend verbunden ist. Den beiden Aktivteilen zugeordnet ist ein Erdungskontaktstück 53, dem ein Erdungskontaktstück 54 und 55 entspricht, wobei das Letztere der Fig. 2 in der Schnittansicht dargestellt ist. Das erste Aktivteil 56, das zu dem Erdungskontaktstück 55 gehört, trägt in der Fig. 2 die Bezugsziffer 56; das zweite Aktivteil trägt in der Zeichnung Fig. 2 die Bezugsziffer 57; in entsprechender Weise sind den Erdungskontaktstücken 54 und 53 die ersten und zweiten Aktivteile 51 und 52 beziehungsweise 51 a zugeordnet; das zugehörige zweite Aktivteil ist durch das Leiterelement 50 verdeckt.

Die drei Trenn- und Erderschalter sind vertikal übereinander angeordnet.

Es sei nun Bezug genommen auf die Fig. 2.

Im ersten Aktivteil 56 befindet sich eine Innenbohrung 60, in der ein Schubkontaktstück 61 in Doppelpfeilrichtung P3 verschiebbar gelagert ist. Dieses Schubkontaktstück 61 kann einerseits mit dem zweiten Aktivteil 57 und damit über das Leiterelement 45 mit den Sammelschienen in Verbindung gebracht werden; andererseits kann es auch dem Erdungskontaktstück 55 in Verbindung gebracht werden, was über eine Antriebseinrichtung 62 erfolgt, die eine Antriebsspindel 63 in Drehung versetzt, welche durch die Erdungskontaktstücke 53, 54 und 55 hindurchgreift und dort jeweils mit einem Umlenkgetriebe 64 in Verbindung steht, welches eine Isolierspindel 65 betätigt. Die Isolierspindel 65, die alle drei Trenn-und Erdungsschalter aufweisen, ist eine Gewindespindel, die ins Innere des Schubkontaktstückes 61 eingreift und bei Drehung das erste Aktivteil 56 mit dem zweiten Aktivteil 57 verbindet, sodass die zugehörige Sammelschiene mit dem zugehörigen Pol des Leistungsschalters in Verbindung gebracht ist. Dabei wird bei Drehung der Isolierspindel 65 das Schubkontaktstück 61 an seiner Drehung gehindert, was auf verschiedene Weise erfolgen kann. Wesentlich ist, dass sich bei Drehung der Isolierspindet 65 das Schubkontaktstück 61 linear verschiebt. Wenn die Antriebseinrichtung in entgegengesetzte Richtung verdreht wird, dann verbindet das Schubkontaktstück 61 das Erdungskontaktstück 55 mit dem Aktivteil 56.

Das Erdungskontaktstück 55, ebenso wie das Erdungskontaktstück 53 und 54, ist an der der Innenfläche 46 gegenüberliegenden Innenfläche 66 des Gehäuses 10 befestigt.

Man erkennt aus der Fig. 2, dass die Trenn- und Erdungsschalteranordnungen zwischen dem der Innenfläche 46 angepassten Leiterelement 45 und der gegenüberliegenden Gehäuseinnenwand 66 angeordnet sind. Damit ist eine geringe Breite des Gehäuses 10 möglich, so dass dadurch das Gehäuse 10 eine ovale Form einnehmen kann.

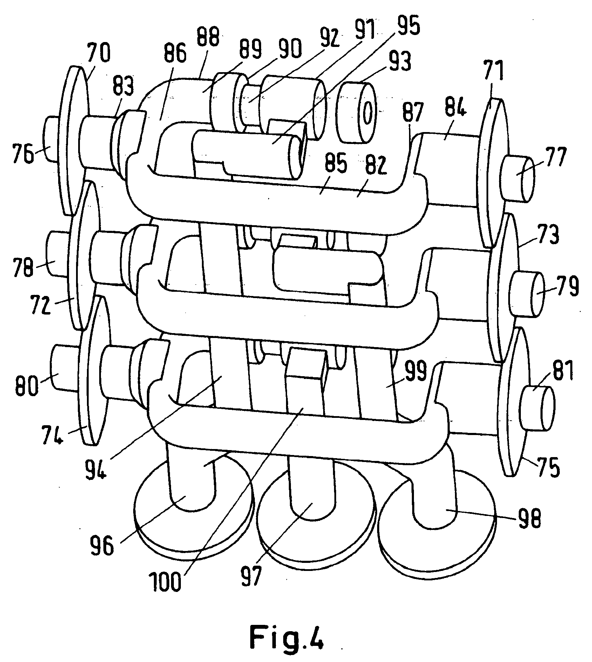

Es sei nun Bezug genommen auf die Fig. 4.

Die Fig. 4 zeigt lediglich die Einbauten ins Innere des Gehäuses 10 mit sich gegenüberliegenden parallel verlaufenden Isolatoren, aus denen mit den Sammelschienen zu verbindende Anschlussstutzen 76, 77; 78, 79; 80, 81 herausragen Die Isolatoren können als Stütz-oder Schottisolatoren ausgebildet sein; hier sind Schottisolatoren gezeichnet. Zwischen den Schottisolatoren 70, 71, den Schottisolatoren 72 und 73 und den Schottisolatoren 74 und 75 ist jeweils eine erste Leiterelementanordhung vorgesehen, wobei lediglich das erste Leiterelement-82, das sich zwischen den beiden Schottisolatoren 70 und 71 befindet, näher betrachtet ist. Das erste Leiterelement 82 schließt dabei an ein Anschlussstück 83 und 84, wobei das erste Leiterelement 82 eine U-Form aufweist mit einem mittleren Bereich 85 und zwei Schenkeln 86 und 87, die mit den Anschlussstücken 83 und 84 verbunden sind. Der Schenkel 86 setzt sich über das Anschlussstück 83 hinaus in einen L-förmigen Fortsatz 88, an dessen dem Steg 85 parallel verlaufenden Schenkel 89 ein erstes Aktivteil 90 befestigt ist, dem ein zweites Aktivteil 91 zugeordnet ist, in denen ein Schubkontaktstück 92 gleitet, wobei die Mittelachse des Schubkontaktstückes 92 und seine Bewegungslinie in der Ebene liegen, die durch die U-Form des zweiten Leiterelementes 82 aufgespannt ist. Die Bewegungslinie des Schubkontaktstückes 92 verläuft demgemäß parallel zu der Verbindungslinie zwischen den Anschlussstücken 76/83 und 77/84.

Weiterhin ist ein Erdungskontaktstück 93 vorgesehen, mit dem das Schubkontaktstück 92 in Verbindung gebracht werden kann.

Das zweite Aktivteil 91 ist mit einem zweiten Leiterelement 94 über einen Zwischenträger 95 verbunden, welches zweite Leiterelement 94 senkrecht zu der durch die U-Form des ersten Leiterelements 82 verlaufenden Ebene verläuft, wobei sich das zweite Leiterelement 94 zwischen dem Steg 85 und dem Schenkel 89 befindet

Die zwischen den Anschlussstücken 78 und 79 beziehungsweise 80 und 81 liegenden Leiterelemente (ohne Bezugsziffern) sind in gleicher Weise ausgebildet wie das erste Leiterelement 82 mit den beiden Aktivteilen 90 und 91 und dem Schubkontaktstück 92 sowie mit dem Erdungsschaltkontaktstück 93, so dass hierauf nicht näher eingegangen werden soll. Unterschiedlich zu der Anordnung bezüglich des Trenn-und Erdungsschalters zwischen den beiden Anschlussstücken 76 und 77 ist die Verbindung des ersten Aktivteils mit den Leitungsschalterpolen. Anstatt eines L-förmig abgekröpften zweiten Leiterelements 94, das mit einem Anschlusskontaktstück 96 zu dem Leistungsschalter eingeführt ist, sind die zweiten Leiterelemente für die anderen Ansehlusskontaktstücke 97 und 98 zu den Leistungsschalterpolen kürzer ausgebildet, wobei das Leiterelement 99 das erste Aktivteil des Trenn- und Erdungsschalters zwischen den Anschlussstücken 78 und 79 und das Leiterelement 100 das erste Aktivteil des Trenn- und Erdungsschalters zwischen den beiden Anschlussstücken 80 und 81 verbindet.

Die Anschlussstücke 96, 97 und 98 entsprechen bei der Ausführung nach Fig. 3 den Anschlussstücken 40, 41 und 42.

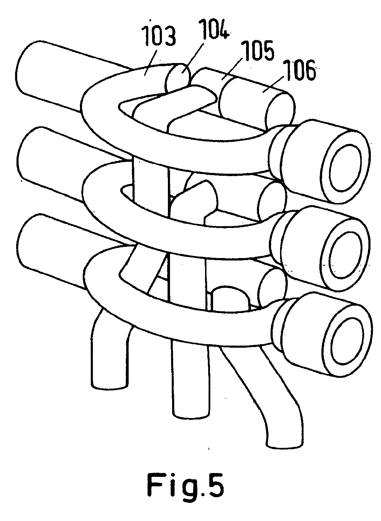

Bei dem Beispiel gemäß Fig. 5 sind die den Leitereiernenten 82 entsprechenden Leiterelemente rund -ovalförmig, wobei sich die Ovalform über das Anschlussstück hinaus fortsetzt und am freien Ende dieses Fortsatzes 103 das erste Aktivteil 104 des Trenn-und Erdungsschalters trägt, dem ein zweites Aktivteil 105 und ein Erdungskontaktstück 106 zugeordnet sind.

Wie aus der Fig. 3 ersichtlich ist, liegen die Bewegungslinien der Schubkontaktstücke 61 vertikal übereinander und in einer Ebene, die parallel zur oder durch die Mittelachse der Ovalform des Gehäuses führt. Demgemäß verlaufen die Isolierstangen senkrecht zu dem mittleren Bereich der Leiterelemente 45, wogegen bei der Ausführung gemäß den Figuren 4 und 5 die Bewegungslinien der Schubkontaktstücke in einer Ebene liegen, die parallel zu der Ebene verläuft, in der die Verbindungslinien der Sammelschienen innerhalb des Gehäuses verlaufen. Man könnte auch sagen, dass die Bewegungslinien bei der Ausführung gemäß den Figuren 4 und 5 senkrecht zu den Bewegungslinien der Ausführung gemäß Fig. 3 verlaufen, was lediglich eine andere Ausführungsform der Erfindung darstellt.

Bei der Ausgestaltung der Fig. 3 sind die zweiten Leiterelemente 49 und 50, die mit den Leistungsschaltern in Verbindung stehen, ebenso wie die ersten Leiterelemente als Flachleiter ausgebildet. Diese Flachleiteranordnung hat den Vorteil, dass einerseits der ohmsche Widerstand und andererseits der sogenannte Wellenwiderstand reduziert sind im Vergleich zu runden Leitern, Darüber hinaus ist auch die Wärmeabfuhr durch natürliche Konvektion im inneren des Gehäuses entlang den Flachleiterelementen verbessert, so dass die Wärmeabfuhr erhöht ist.

Über die im Deckel 30 befindlichen Kühlrippen 31 kann dann Wärme zusätzlich abgeführt werden.

Bei dem Beispiel gemäß den Figuren 4 und 5 sind die Leiterelemente 82 im Querschnitt ovalförmig, und entweder aus Halbzeugen oder gegossenen Elementen herstellbar, was wegen der Ovalform ebenfalls zu einer Verbesserung der Wärmeabfuhr gegenüber runden Leitern führt und darüber hinaus gegenüber Rundleitem zu einem geringeren Widerstand.

Nachzutragen ist noch, dass aus dem gleichen Grund, aus dem die zweiten Leiterelemente 50. 49 Flachleiter sind, auch die Leiterelemente 45 gemäß Fig 2 Flachleiter und bei der Ausführung gemäß den Figuren 4 und 5 die entsprechenden Leiterelemente, wie erwähnt, oval sind.

Die Erfindung ist an Hand eines dreiphasigen Schalters beschrieben; ist natürlich auch bei zweiphasigen Schaltem anwendbar.

## Patentansprüche

1. Metallgekapselter, mehrphasiger Sammelschienentrenn- und Erdungsschalter, mit einem Gehäuse (10), das an den entgegengesetzten Seiten einen ersten Flansch (11) und einen zweiten Flansch (12) zum Anschluss an je eine Sammelschiene und an einer dritten Seite einen dritten Flansch (25) zum Anschluss an einen Leistungsschalter aufweist, mit im Inneren des Gehäuses (10) angeordneten Leiterelementen, von denen erste Leifierelemente (43, 44, 45) mit den Sammelschienen und zweite Leiterelemente (49, 50) mit den Leistungsschalterpolen verbunden sind, die mit den Leistungsschalterpolen verbundenen zweiten Leiterelemente (49, 50) senkrecht zu den ersten Leiterelementen (43, 44, 45), die die Sammelschienen miteinander verbinden, ausgerichtet sind, dass die ersten Leiterelemente (43, 44, 45) etwa U-förmig ausgebildet und-um die zweiten Leiterelemente (49, 50) herumgeführt sind, und dass eine Trenn- und Erderschaltkontaktanordnung zwischen einer der Gehäuseinnenwände und den ersten und zweiten Leiterelementen (43, 44, 45, 49, 50) vorgesehen ist, **dadurch gekennzeichnet, dass**
die Trenn- und Erderschaltelemente der Trenn- und Erderschaltkontakt-anordnung Schubkontaktstücke (61) aufweisen, wobei die Bewegungslinien der Schubkontaktstücke (61) in einer Ebene liegen, die senkrecht zu der Ebene verläuft, die durch die Sammelschienen aufgespannt ist.

2. Trenn- und Erdungsschalter nach Anspruch 1, **dadurch gekennzeichnet, dass** das Gehäuse (10) als Hohlkörper mit ovalem Querschnitt ausgebildet ist, dessen längere Achse etwa parallel zur Leitungsführung der ersten Leiterelemente (43, 44, 45) und der Sammelschienen ausgerichtet ist.

3. Trenn-Erdungsschalter nach Anspruch 2, **dadurch gekennzeichnet, dass** die Sammelschienen jeweils an den Schmalseiten oder an den Abschnitt des Gehäuses (10) anschließen, das den kleineren Innenradius aufweist.

4. Trenn- und Erdungsschalter nach einem der Ansprüche 2 oder- 3, **dadurch gekennzeichnet, dass** die ersten Leiterelemente (43, 44, 45) nahe der ersten Innenfläche des Gehäuses (10) geführt sind, die den größeren Radius der Ovalform besitzt

5. Trenn- und Erdungsschalter nach Anspruch 4, **dadurch gekennzeichnet, dass** die Trenn- und Erdungsschaltelemente zwischen den zugehörigen ersten Leiterelementen (43, 44, 45) und der der ersten Gehäuseinnenfläche gegenüber liegenden Gehäuseinnenfläche, die ebenfalls den größeren Innenradius aufweist, angeordnet sind.

## Claims

1. Metal-encapsulated, polyphase busbar disconnecting and grounding switch, having a housing (10) which, on opposite sides, has a first flange (11) and a second flange (12) for connection to in each case one busbar and, on a third side, a third flange (25) for connection to a circuit breaker, having conductor elements which are arranged in the interior of the housing (10), of which first conductor elements (43, 44, 45) are connected to the busbars and second conductor elements (49, 50) are connected to the circuit breaker poles,
the second conductor elements (49, 50), which are connected to the circuit breaker poles, are aligned at right angles to the first conductor elements (43, 44, 45) which connect the busbars to one another, in that the first conductor elements (43, 44, 45) are approximately U-shaped and are passed around the second conductor elements (49, 50), and in that a disconnecting and grounder switching contact arrangement is provided between one of the housing inner walls and the first and second conductor elements (43, 44, 45, 49, 50) **characterized in that** the disconnecting and grounder switching elements of the disconnecting and grounder switching contact arrangement have linear-movement contact pieces (61), with the movement lines of the linear-movement contact pieces (61) lying on a plane which runs at right angles to the plane which is covered by the busbars.

2. Disconnecting and grounding switch according to Claim 1, **characterized in that** the housing (10) is in the form of a hollow body with an oval cross section, whose longer axis is aligned approximately parallel to the line routing of the first conductor elements 43, 44, 45) and of the busbars.

3. Disconnecting/grounding switch according to Claim 2, **characterized in that** busbars are each connected to the narrow faces or to that section of the housing (10) which has the smaller internal radius.

4. Disconnecting and grounding switch according to one of Claims 2 and 3, **characterized in that** the first conductor elements (43, 44, 45) are routed close to the first inner surface of the housing (10) which has the larger radius of the oval shape.

5. Disconnecting and grounding switch according to Claim 4, **characterized in that** the disconnecting and grounding switching elements are arranged between the associated first conductor elements (43, 44, 45) and the housing inner surface which is located opposite the first housing inner surface and likewise has the greater internal radius.

## Revendications

1. Contacteur sectionneur de barre-bus et de mise à la terre multiphasé, sous encapsulation métallique, comprenant un boîtier (10) qui possède sur les côtés opposés une première bride (11) et une deuxième bride (12) destinées respectivement au raccordement à une barre-bus et, sur un troisième côté, une troisième bride (25) destinée au raccordement à un commutateur de puissance, comprenant des éléments conducteurs disposés à l'intérieur du boîtier (10), parmi lesquels des premiers éléments conducteurs (43, 44, 45) sont reliés aux barres-bus et des deuxièmes éléments conducteurs (49, 50) aux pôles du commutateur de puissance, les deuxièmes éléments conducteurs (49, 50) reliés aux pôles du commutateur de puissance sont orientés perpendiculairement aux premiers éléments conducteurs (43, 44, 45) qui relient les barres-bus entre elles, en ce que les premiers éléments conducteurs (43, 44, 45) ont une configuration approximativement en forme de U et sont passés autour des deuxièmes éléments conducteurs (49, 50), et en ce qu'il existe entre l'une des parois intérieures du boîtier et les premiers et deuxièmes éléments conducteurs (43, 44, 45, 49, 50) un arrangement de contact de sectionnement et de mise à la terre, **caractérisé en ce que** les éléments de sectionnement et de mise à la terre de l'arrangement de contact de sectionnement et de mise à la terre possèdent des pièces de contact coulissantes (61), les lignes de déplacement des pièces de contact coulissantes (61) se trouvant dans un plan qui est perpendiculaire au plan sur lequel s'étendent les barres-bus.

2. Contacteur de sectionnement et de mise à la terre selon la revendication 1, **caractérisé en ce que** le boîtier (10) est réalisé sous la forme d'un corps creux ayant une section transversale ovale dont l'axe le plus long est orienté approximativement en parallèle avec le tracé de la ligne des premiers éléments conducteurs (43, 44, 45) et des barres-bus.

3. Contacteur de sectionnement et de mise à la terre selon la revendication 2, **caractérisé en ce que** les barres-bus se raccordent respectivement aux côtés étroits ou à la portion du boîtier (10) qui présente le rayon intérieur le plus petit.

4. Contacteur de sectionnement et de mise à la terre selon l'une des revendications 2 ou 3, **caractérisé en ce que** les premiers éléments conducteurs (43, 44, 45) passent à proximité de la première surface intérieure du boîtier (10) qui possède le rayon le plus grand de la forme ovale.

5. Contacteur de sectionnement et de mise à la terre selon la revendication 4, **caractérisé en ce que** les éléments de sectionnement et de mise à la terre sont disposés entre les premiers éléments conducteurs (43, 44, 45) associés et la surface intérieure du boîtier qui se trouve à l'opposé de la première surface intérieure du boîtier et qui présente également le rayon intérieur le plus grand.
